# EUROPEAN PATENT APPLICATION

(11) **EP 2 270 908 A1**
(43) Date of publication of application: **05.01.2011**
(21) Application number: 08700590.6
(22) Date of filing: 03.01.2008
(51) Int. Cl.: H01M 6/14, H01M 4/58, H01M 4/62

(54) **HIGH ENERGY BATTERY AND THE MANUFACTURE METHOD THEREOF**

(71) Applicant: Huizhou City Desay Lithium Battery S&T Co. Ltd, Guangdong 516008 (CN); Pan, Wenshuo, Guangdong 516008 (CN)
(72) Inventor: PAN, Wenshuo, Guangdong 516008 (CN); HE, Xianwen, Huizhou Guangdong 516008 (CN); LAO, Zhongfen, Huizhou Guangdong 516008 (CN)
(74) Representative: Hellmich, Wolfgang
(86) International application number: PCT/CN2008/000030
(87) International publication number: WO 2009/082862

(57) **Abstract**

A 1.5V battery and manufacturing method thereof is disclosed. The battery includes a positive electrode composed of 80%-90 weight-% of pyrite, up to 3.5% of conductive carbon black, 3%-5% of graphite, 2%-4% of oxide or lithium oxide and 1%-4% of water-soluble adhesive; a negative electrode composed of lithium metal or a lithium-aluminum alloy; an electrolyte composed of an organic solvent selected from three or more of NMP, PC, DME, DOL, isoxazoles, THF, DMSO and SFL; and an inorganic salt solute selected from one or more of LiClO₄, LiCF₃SO₃, Lil, LiAsF₆ and LiBF₄; and a separator made of polyethylene resins.

## Description

### Background of the Invention

### 1. Technical Field

The invention generally relates to batteries, particularly to a kind of battery with voltage of 1.5V and being exchangeable with traditional carbon-zinc battery, alkaline battery, Ni-MH battery, Ni-Cd battery, Ni-Zn battery and Zn-air battery.

### 2. Related Art

The reason why Zn-Mn batteries have always occupied a certain market share for over 100 years is their cheap and abundant production materials. Performance of Zn-Mn batteries, however, is difficult to be improved. Also, there is no room for cost down. And because of razor-thin profits, weaker and weaker the market competitiveness of Zn-Mn batteries is. Contrarily, alkaline batteries have been developing in aspects of performance and cost reduction since they appeared in the market. Thus the future of alkaline batteries is still worthy of being expected. But price competition of alkaline batteries will be fierce because the current technology of alkaline batteries tends to be mature. On the other hand, lithium primary batteries will expand their applications in the field of heavy load.

Batteries must constantly improve to have higher capacity, higher energy density, longer durability, longer shelf-life and cheaper price to satisfy the requirements of modern electronic apparatuses. Currently, the primary market share is occupied by low-end batteries which can not satisfy the requirement of heavy load. Although alkaline Zn-Mn batteries have been increased their ability of heavy load, they still can not satisfy market requirements. For example, a typical digital camera using an alkaline Zn-Mn battery can continuously take only about 70 shots, but it can continuously take 788 shots when using a lithium battery. Lithium battery is 11 times over alkaline Zn-Mn battery in durability, and the number of times will be much more if discontinuously taking shots. Further, a lithium battery is a half of an alkaline Zn-Mn battery in weight. A Zn-Ni may support about 500 shots, but its shelf-life is too short and it's too heavy in weight. Lithium batteries have the best performance in all aspects.

Secondary batteries have become popular due to recyclability, but they still can not replace primary batteries because of long charging time, short shelf-life, low capacity and insufficient safety. Therefore, primary batteries still occupy an important market share, especially the 1.5 volt batteries.

### Summary of the Invention

An object of the invention is to provide a high energy battery and the manufacture thereof which can improve large current discharge ability, environment friendliness and safety. By the improvement of battery composition and manufacturing method, the energy density of battery of the invention is at least two times over ordinary alkaline battery under a certain condition of discharge.

To accomplish the above object, the battery of the invention includes:
a positive electrode comprising 80%-90% of pyrite, up to 3.5% of conductive carbon black, 3%-5% of graphite, 2%-4% of oxide or lithium oxide and 1%-4% of water-soluble adhesive, wherein the percentage is by weight, purity and a particle size of the pyrite are above 90% and smaller than 44µm, respectively; an average particle size, a BET specific surface area and an ash content of the graphite are 5-18µm, 11-14 m²/g and lower than 0.1%, respectively; the oxide is selected from MnO₂, TiO₂, LiCoO₂, LiMnO₂, LiNiO₂, Li₂TiO₃, and Li₄Ti₅O₁₂;
a negative electrode comprising lithium metal or a lithium-aluminum alloy, wherein an aluminum content of the lithium-aluminum alloy are 0.05%-0.1%, and a thickness is 0.1-0.2mm;
an electrolyte comprising:
an organic solvent selected from three or more of n-methyl pyrrolidone (NMP), 1,2 - propylene carbonate (PC), ethylene glycol dimethyl ether (DME), 1,3-dioxolane (DOL), isoxazoles, tetrahydrofuran (THF), dimethyl sulfoxide (DMSO) and sulfolane (SFL); and an inorganic salt solute selected from one or more of lithium perchlorate (LiClO₄), lithium trifluoromethanesulphonate (LiCF₃SO₃), lithium iodide (Lil), lithium hexafluoroarsenate (LiAsF₆) and lithium tetrafluoroborate (LiBF₄); and a separator made of polyethylene resins.

In the battery of the invention, the adhesive is selected one or two of polyvinyl alcohol (PVA), polyvinylidene fluoride (PVDF), polytetrafluoroethylene (PTFE), carboxymethylcellulose (CMC) and Styrene-Butadiene-Rubber (SBR), the CMC and the SBR or the PVDF and NMP is 1%-4% of the pyrite in weight.

In the battery of the invention, a proportion of contents of the organic solvent is 0-10% of the PC, 15%-30% of the DME, 15%-80% of the DOL, 0-30% of the NMP or the SFL and 0-5% of the DMI.

In the battery of the invention, the inorganic salt solute is selected from LiClO₄ and Lil, whose molar concentration is 0.8-1.2mol/L.

In the battery of the invention, a maximum effective aperture of the separator is 0.08-0.12pm, porosity is 40%-50% and impedance is 30-50mΩ/mm².

The battery of the invention further comprises a current collector made of aluminum foil whose thickness is 16-25µm and tabs made of stainless steel belt, nickel plated steel belt or nickel belt, whose thickness is 0.05-0.1 mm.

The battery of the invention further comprises an endcap with explosion-proof and overcurrent-proof function, wherein the endcap comprises a 4-layered composite membrane composed of polyethylene (PE), aluminum, polyethylene (PE) and silicone and a 3-layered thermistor composed of copper foil, conductive carbon black and copper foil; a total thickness of the composite membrane is 0.14-0.22mm; respective thickness of the 4 layers is 0.03-0.05mm, 0.03-0.05mm, 0.03-0.05mm and 0.05-0.07mm; an impedance of each layer of the thermistor is lower than 32mΩ.

The method for manufacturing the above battery includes the steps of:
a) mixing pyrite, graphite, acetylene black , and lithium oxide into a mixture;
b) mixing the mixture with water and adhesive into a pulp;
c) coating the pulp on a positive current collector; and
d) heating, rolling, slitting and shaping the positive current collector with the pulp;
wherein the water is 50%-150% of the pyrite in weight.

In the battery of the invention, a heating temperature in step d) is 50-130°C, a thickness is 0.10-0.25mm and a porosity is 30-45%.

In the battery of the invention, the pyrite is processed by:
a) spreading the pyrite on a stainless steel tray;
b) putting the pyrite on the tray in an oven to be heated in a temperature range of 100-700°C and within a period of 1-24 hours; and
c) sealing up the heated pyrite with a bag and storing up in a shady and arid place.

In the battery of the invention, the pyrite is processed with acid, alkali and deionized water, wherein the acid is selected from sulfuric acid, hydrochloric acid, phosphoric acid and acetic acid, and the alkali is selected from sodium hydroxide, potassium hydroxide and ammonia water.

The method of the invention further comprises the steps of:
e) drying the positive electrode plate;
f) winding the negative electrode and separator under a relative humidity lower than 1%; and
g) loading materials into a casing and sealing up the casing.

### Brief Description of the Drawings

FIG. 1 shows a coating step of the invention;
FIG. 2 is a cross-sectional view of the endcap of the battery according to the invention;
FIG. 3 is a cross-sectional view of the whole battery according to the invention;
FIG. 4 is a comparative chart of the invention with other 1.5V batteries under a discharge manner of 1000mA-cont to0.8V; and
FIG. 5 is a comparative chart of the invention with other 1.5V batteries under a discharge manner of 2000mA-cont to0.8V;
in which, reference number 1 is a pulp, 2 is aluminum foil, 3 is a scraper, 4 is a roller, 5 is a thermistor, 6 is a stainless steel sheet, 7 is an explosion-proof membrane, 8 is an upper pad, 9 is lower cover, 10 is a sealing ring, 11 is a steel casing, 12 is a upper cover, 13 is a positive tab, 14 is a positive electrode, 15 is a separator, 16 is a negative electrode, 17 is a negative tab, "a" is an alkaline battery, "b" is a Zn-Ni battery, "c" is a Ni-MH battery and "d" is the high energy battery of the invention.

### Detailed Description of the Invention

The battery of the invention is composed of a positive electrode, a negative electrode and electrolyte, wherein a pyrite serves as the positive active material, a lithium-aluminum alloy serves as the negative material and a mixture of an organic solvent and an inorganic salt solute serves as the electrolyte.

As abovementioned, the positive active material of the invention is a pyrite (formula: FeS₂). The pyrite must be processed in advance. The process of pyrite is shattering and screening with particle size not larger than 0.044mm. Further, the pyrite must be processed by at least one of the following two methods. The one is heat treatment: a) spreading the pyrite on a stainless steel tray; b) putting the pyrite on the tray in an oven to be heated in a temperature range of 100-700°C and within a period of 1-24 hours; and c) sealing up the heated pyrite with a bag and storing up in a shady and arid place. The other one is chemical treatment, which is processing the pyrite with acid, alkali and deionized water, wherein the acid may be sulfuric acid, hydrochloric acid, phosphoric acid or acetic acid, and the alkali may be sodium hydroxide, potassium hydroxide or ammonia water.

The positive conducting additives of the battery may be two or more of graphite, acetylene black, metallic powder, oxide and lithium oxide.

The positive adhesive of the battery may be one or two of polyvinyl alcohol (PVA), polyvinylidene fluoride (PVDF), polytetrafluoroethylene (PTFE), carboxymethylcellulose (CMC) and Styrene-Butadiene-Rubber (SBR).

The positive current collector of the battery is aluminum foil whose thickness is 16-25µm. The tabs are made of stainless steel belt, nickel plated steel belt or nickel belt, whose thickness is 0.05-0.1 mm.

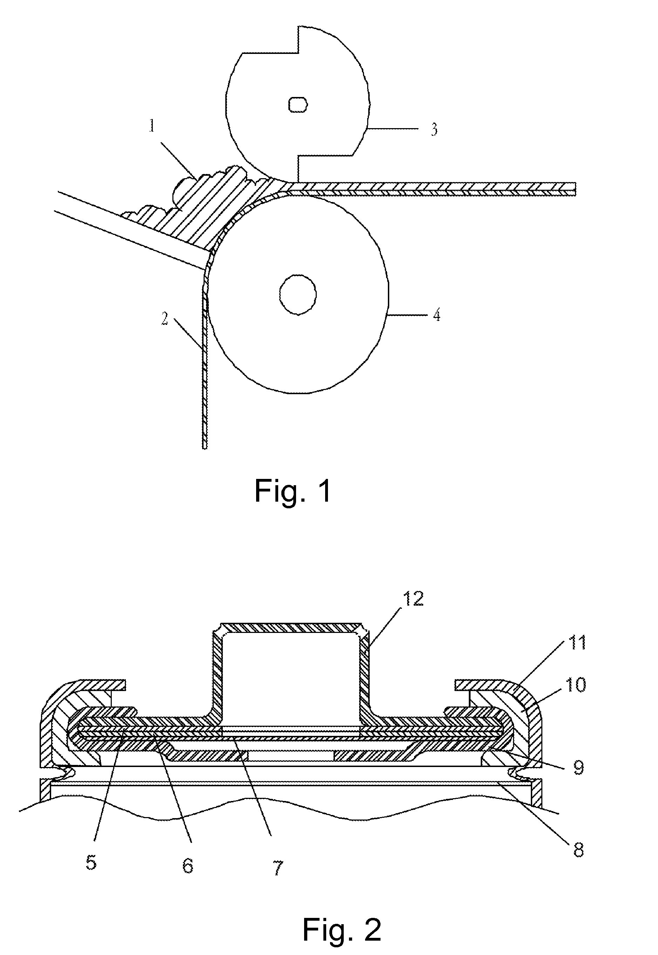

The positive electrode of the battery is made by: a) mixing the positive active material and the positive conducting additives into a pulp; b) coating the pulp on the positive current collector; and c) rolling, slitting and shaping the positive current collector with the pulp, as shown in FIG. 1.

The negative active material of the battery is foil of lithium-aluminum alloy, wherein the aluminum content is 0.05%-0.1%.

The battery of the invention uses a mixture of an organic solvent and an inorganic salt solute to serve as the electrolyte. The inorganic salt may be one or more of lithium perchlorate (LiClO₄), lithium trifluoromethanesulphonate (LiCF₃SO₃), lithium iodide (Lil), lithium hexafluoroarsenate (LiAsF₆) and lithium tetrafluoroborate (LiBF₄). The organic solvent may be a mixture of three or more of n-methyl pyrrolidone (NMP), 1,2 - propylene carbonate (PC), ethylene glycol dimethyl ether (DME), 1,3-dioxolane (DOL), isoxazoles, tetrahydrofuran (THF) and dimethyl sulfoxide (DMSO).

The endcap of the battery is provided with an explosion-proof and overcurrent-proof device as shown in FIG. 2.

The assembling process of the battery is: a) drying the positive electrode plate; b) winding the negative electrode and separator under a relative humidity lower than 1%; and c) loading the abovementioned materials into a casing and sealing up the casing.

The chemical equation of discharge reaction of the battery is:

FeS₂ +4Li→ Fe +2Li₂S

And the chemical mechanism of discharge reaction of the battery is:

FeS₂ + 4Li→ 2Li + Li₂FeS₂→ Fe +2Li₂S

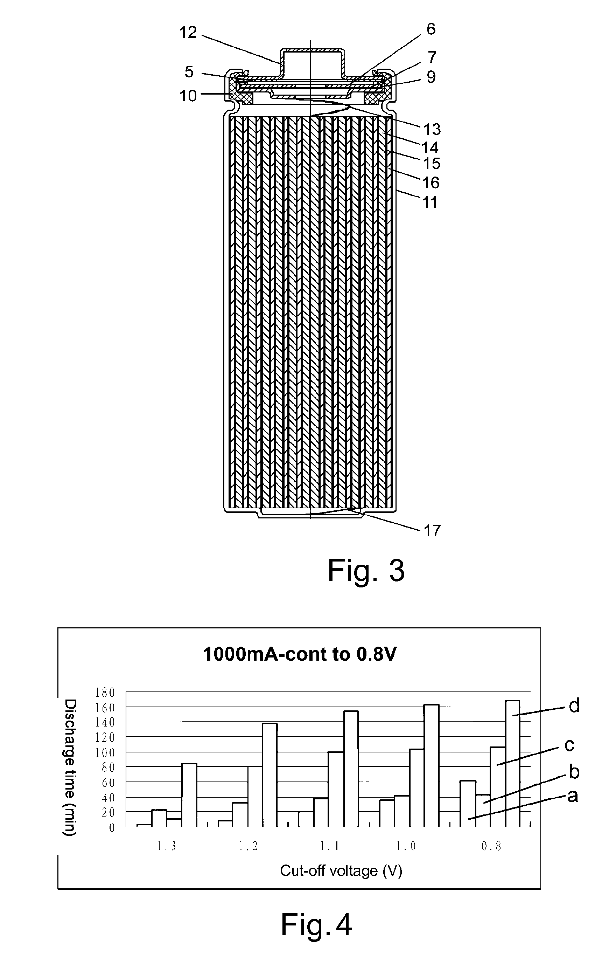

The structure of the battery is shown in FIG. 3.

### [Technical Features]

### 1. Unique treatment technique of positive electrode:

The open-circuit voltage will be higher than 2V if iron disulfide material contains impurities. But purifying iron disulfide material will cost a lot. The method of the invention adopts a unique technique to overcome the problem of overhigh open-circuit voltage. And the performance of discharge is improved, especially in high drain uses. Detailed comparative data is shown in Table 1.

**Table 1**

| Discharge manner | | | | | | 1000mA cont/0.8V | | | | | |
|---|---|---|---|---|---|---|---|---|---|---|---|
| batteries of the invention | 1# | 2# | 3# | 4# | 5# | | 6# | 7# | 8# | 9# | Average |
| Capacity m Ah | 275 0 | 271 2 | 278 9 | 290 8 | 293 7 | | 291 4 | 279 3 | 276 4 | 278 8 | 2817 |
| Traditional batteries | 1# | 2# | 3# | 4# | 5# | | 6# | 7# | 8# | 9# | Average |
| Capacity m Ah | 266 6 | 267 7 | 266 7 | 267 6 | 267 8 | | 270 0 | 265 0 | 266 0 | 267 6 | 2672 |

### 2. Unique electrolyte:

LiClO₄ is a common electrolyte in lithium primary batteries, but iron disulfide may be oxidized by it to generate harmful gas in batteries. This will raise a problem of gas distension. The improved electrolyte and additives overcome this problem.

### 3. Great safety:

Safety is an important issue of lithium batteries, especially for cylindrical Li-FeS₂ batteries. An explosion-proof membrane and the PTC are employed to guarantee safety of batteries. A detailed test data is shown in Table 2.

**Table 2**

| Inspection | Requirement | Result | Conclusio n |
|---|---|---|---|
| External short-circuit | 5 pieces of the battery are equalized at (55±2)°C . The batteries are shorted by a resistor smaller than 0.1Ω. Keep shorting until temperature of casings of the batteries has descended back to (55±2)°C for at least one hour. Explosion and firing should not occur. | Meet the requirement | OK |
| 3+1 inverse | One battery is connected with other 3 batteries in series and the tested battery is connected inversely in polarity. The load connected to the series of batteries is nor larger than 0.1Ω. Explosion and firing should not occur after the shorting lasts 24 hours. | Meet the requirement | OK |
| Over-discharge | The tested battery is discharged to 50% and 100% (DOD) and then connects other three batteries and a resistor of 2KΩ in series for continuously discharging 24 hours. Explosion and firing should not occur. | Meet the requirement | OK |
| Crush | 5 pieces of the battery are crushed by a vise. The axes of the batteries are parallel to the crushing surfaces of the vise. The maximum crushing force is about 13kN. The crush is not released until the maximum crushing force has been reached. Explosion and firing should not occur. | Meet the requirement | OK |

### [Embodiment of manufacturing high energy battery with 1.5V]

The pyrite must be shattered and screened with 75% passing through sieve with 200 meshes (particle size not larger than 0.076mm) and 25% passing through sieve with 325 meshes (particle size not larger than 0.044mm). Purity is 99.44%. The sulphur content and iron content are 53.15% and 46.5%, respectively. The impurities are SiO₂ with content less than 0.1 %, MgO with content not larger than 0.1 %, Al₂O₃ with content less than 0.15% CaO with content not larger than 0.1% and acid-soluble iron with content less than 0.38%.

The processing method is described as the following:
1) Pyrite is loaded in a plastic pail and is mixed with diluted hydrochloric acid at 1%-2% HCl. Then the pyrite is stirred for 30 minutes.
2) Wait for precipitation. Then add water to stir and filter repeatedly until the filtered water is about pH7.
3) Drench the pyrite with NaOH solution at 10% for 12-15 hours.
4) Load the pyrite with NaOH solution in an iron pail and heat up the iron pail with stirring for 1 hour.
5) Wait for precipitation. Then add water to stir and filter repeatedly until the filtered water is about pH7. Wash the pyrite with deionized water twice.

The method for manufacturing positive electrode includes the steps of:
a) Mixing the pyrite from the abovementioned method, graphite, acetylene black and zinc powder in a proportion of 90%, 4%, 4% and 2% into a mixture;
b) Grinding the mixture for 2 hours;
c) Mashing the mixture with polyvinylidene fluoride (PVDF) as adhesive and n-methyl pyrrolidone (NMP) as solvent into a jelly;
d) Coating the jelly on an aluminum foil;
e) Heating the aluminum foil with the jelly at 100°C; and
f) Rolling the heated aluminum foil with the jelly to a thickness of 0.18mm.

The negative active material of the battery is a sheet of lithium-aluminum alloy whose aluminum content is 0.3%.

The electrolyte of the battery is lithium iodide whose molar concentration is 1.0mol/L

The organic solvent is propylene carbonate (PC), ethylene glycol dimethyl ether (DME), 1,3-dioxolane (DOL), n-methyl pyrrolidone (NMP) and isoxazole (DMI), whose proportion is 5:20:70:3:2.

Experimentally, the battery of the invention with AA size may have a capacity of 2900mAh or above. (discharge manner: 1000mA constant current discharge, cut-off voltage: 0.8V)

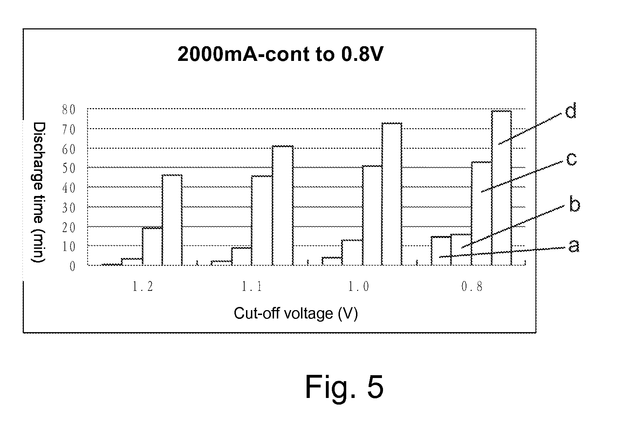

A comparison between the battery and other 1.5V batteries is shown in FIGs. 4 and 5. (discharge manner: 1000mA constant current discharge, cut-off voltage: 0.8V; 2000mA constant current discharge, cut-off voltage: 0.8V)

It will be appreciated by persons skilled in the art that the above embodiment has been described by way of example only and not in any limitative sense, and that various alterations and modifications are possible without departure from the scope of the invention as defined by the appended claims.

## Claims

1. A high energy battery comprising a positive electrode, a negative electrode, a electrolyte and a separator, wherein
the positive electrode comprises pyrite, conductive carbon black, graphite and lithium oxide, a weight ratio of the pyrite: the conductive carbon black: the graphite: the lithium oxide is 80-90: 1-4: 1-4: 2-4, a purity of the pyrite is more than 90%, a particle size of the pyrite is less than 44µm, an average particle size of the graphite is 5.0-18.0µm, a BET specific surface area of the graphite is 11.0-14.0m²/g, an ash content of the graphite is less than 0.1%, the lithium oxide comprises MnO₂, TiO₂, LiCoO₂, LiMnO₂, LiNiO₂, Li₂TiO₃, Li₄Ti₅O₁₂ or combination thereof;
the negative electrode comprises metal lithium or lithium aluminum alloy and has an aluminum content of 0.05%-0.10%, and a thickness of the negative electrode is 0.10-0.20mm;
the electrolyte comprises a mixture solution of organic solvent and inorganic lithium salt solute, the organic solvent comprises a combination of any three or more of N-methylpyrrolidone (NMP), 1,2-propanediol carbonate (PC), dimethoxy-ethane (DME), 1,3-dioxolane (DOL), isoxazole substance (such as DMI), tetrahydrofuran (THF), dimethyl sulfoxide (DMSO) and sulfolane (SFL), and the inorganic lithium salt solute is lithium perchlorate (LiClO₄), lithium trifluoromethanesulfonate (LiCF₃SO₃), lithium iodide (Lil), Lithium hexafluoroarsenate (LiAsF₆), lithium tetrafluoroborate (LiBF₄) or a combination thereof;
the separator comprises polyethylene resin containing PP/PE/PP.

2. The high energy battery according to claim 1, wherein the positive electrode comprises a combination of any two of conductive carbon black, graphite and lithium oxide.

3. The high energy battery according to claim 1, wherein an adhesive of the positive electrode comprises polyvinyl alcohol (PVA), polyvinylidene fluoride (PVDF), polytetrafluoroethylene (PTFE), sodium carboxymethyl cellulose (CMC), styrene-butadiene rubber latex (SBR), N-methylpyrrolidone (NMP) or a combination of any two thereof, and an amount of (CMC), (SBR), (PVDF) or (NMP) is 1-4% by weight of the pyrite.

4. The high energy battery according to claim 1, wherein in the organic solvent, a ratio of (PC): (DME): (DOL): (NMP): (DMI) is (0-10): (15-30): (15-80): (0-5): (0-5).

5. The high energy battery according to claim 1, wherein the inorganic lithium salt solute comprises one of lithium perchlorate (LiClO₄) and lithium iodide (Lil), and a molar concentration of the inorganic lithium salt solute is 0.8-1.2mol/L.

6. The high energy battery according to claim 1, wherein a maximum effective aperture of the separator is 0.08-0.12µm, a porosity of the separator is 40-50% and a resistance of the separator is 30-50mΩ/mm².

7. The high energy battery according to claim 1, wherein the battery comprises an explosion-proof and anti-overcurrent cap, the cap having a composite film with four layers and thermal resistor with three layers formed therein, the composite film made of PE/Al/PE/silica gel, the thermal resistor made of copper foil/conductive carbon black/copper foil, a total thickness of the composite film being 0.14-0.22mm, thickness of the four layers of the composite film being 0.03-0.05mm/0.03-0.05mm/0.03-0.05mm/0.05-0.07mm, a resistance of each layer of the thermal resistor being less than 32mΩ, while 3.5A current passing through, action time being less than 10 seconds, and while 8A current passing through, the action time being less than 2 seconds.

8. A method for manufacturing the high energy battery according to claim 1, wherein the positive electrode is formed by mixing the pyrite, the graphite, acetylene black and lithium oxide in a predetermined ratio, adding water, adhesive to mix uniformly so as to form a slurry, coating the slurry on a current collector, drying, rolling to a predetermined thickness and cutting to a suitable size, and
spot welding a positive electrode ear, the added water accounted for 50-150% by weight of the pyrite.

9. The method for manufacturing the high energy battery according to claim 8, wherein a temperature for drying the positive electrode is 50-130°C, a thickness is 0.10-0.25mm and a porosity is 30-45%.

10. The method for manufacturing the high energy battery according to claim 8, wherein a method for processing the pyrite comprises heat treatment or chemical treatment, the heat treatment including spreading the pyrite on a stainless steel tray and placing into an oven, a temperature of the heat treatment being in a range of 100-700°C, time of the heat treatment being 1-24 hours, and after the heat treatment, the pyrite being packaged in a sealed bag and stored in a cool dry environment, the chemical treatment including treating the pyrite by acid, alkali and deionized water, the acid including sulfuric acid, hydrochloric acid, phosphoric acid or acetic acid, the alkali including sodium hydroxide, potassium hydroxide or ammonia water.

## Amended claims

### Amended claims under Art. 19.1 PCT

1. A battery comprising:
a positive electrode comprising 80%-90% of pyrite, up to 3.5% of conductive carbon black, 3%-5% of graphite, 2%-4% of oxide or lithium oxide and 1%-4% of water-soluble adhesive, wherein the percentage is by weight, purity and a particle size of the pyrite are above 90% and smaller than 44µm, respectively;
an average particle size, a BET specific surface area and an ash content of the graphite are 5-18µm, 11-14 m2/g and lower than 0.1%, respectively; the oxide is selected from Mn02, Ti02, LiCoO2, LiMn02, LiNi02, Li2TiO3, and Li4Ti5O12;
a negative electrode comprising lithium metal or a lithium-aluminum alloy, wherein an aluminum content of the lithium-aluminum alloy are 0.05%-0.1%, and a thickness is 0.1-0.2mm;
an electrolyte comprising:
an organic solvent selected from three or more of n-methyl pyrrolidone (NMP), 1,2 - propylene carbonate (PC), ethylene glycol dimethyl ether (DME), 1,3-dioxolane (DOL), isoxazoles, tetrahydrofuran (THF), dimethyl sulfoxide (DMSO) and sulfolane (SFL); and
an inorganic salt solute selected from one or more of lithium perchlorate (LiClO4), lithium trifluoromethanesulphonate (LiCF3SO3), lithium iodide (Lil), lithium hexafluoroarsenate (LiAsF6) and lithium tetrafluoroborate (LiBF4); and
a separator made of polyethylene resins.

2. The battery of claim 1, wherein the adhesive is selected one or two of polyvinyl alcohol (PVA), polyvinylidene fluoride (PVDF), polytetrafluoroethylene (PTFE), carboxymethylcellulose (CMC) and Styrene-Butadiene-Rubber (SBR), the CMC and the SBR or the PVDF and NMP is 1%-4% of the pyrite in weight.

3. The battery of claim 1, wherein a proportion of contents of the organic solvent is 0-10% of the PC, 15%-30% of the DME, 15%-80% of the DOL, 0-30% of the NMP or the SFL and 0-5% of the DMI.

4. The battery of claim 1, wherein the inorganic salt solute is selected from LiClO₄ and Lil, whose molar concentration is 0.8-1.2mol/L.

5. The battery of claim 1, wherein a maximum effective aperture of the separator is 0.08-0.12µm, porosity is 40%-50% and impedance is 30-50mΩ/mm².

6. The battery of claim 1, further comprising a current collector made of aluminum foil whose thickness is 16-25µm and tabs made of stainless steel belt, nickel plated steel belt or nickel belt, whose thickness is 0.05-0.1 mm.

7. The battery of claim 1, further comprising an endcap with explosion-proof and overcurrent-proof function, wherein the endcap comprises a 4-layered composite membrane composed of polyethylene (PE), aluminum, polyethylene (PE) and silicone and a 3-layered thermistor composed of copper foil, conductive carbon black and copper foil; a total thickness of the composite membrane is 0.14-0.22mm; respective thickness of the 4 layers is 0.03-0.05mm, 0.03-0.05mm, 0.03-0.05mm and 0.05-0.07mm; an impedance of each layer of the thermistor is lower than 32mΩ.

8. A method for manufacturing a battery having a positive electrode, the method comprising the steps of:
a) mixing pyrite, graphite, acetylene black, and lithium oxide into a mixture;
b) mixing the mixture with water and adhesive into a pulp;
c) coating the pulp on a positive current collector; and
d) heating, rolling, slitting and shaping the positive current collector with the pulp; wherein the water is 50%-150% of the pyrite in weight.

9. The method of claim 8, wherein a heating temperature in step d) is 50-130°C, a thickness is 0.10-0.25mm and a porosity is 30-45%.

10. The method of claim 8, wherein the pyrite is processed by:
a) spreading the pyrite on a stainless steel tray;
b) putting the pyrite on the tray in an oven to be heated in a temperature range of 100-700°C and within a period of 1-24 hours; and
c) sealing up the heated pyrite with a bag and storing up in a shady and arid place.

11. The method of claim 8, wherein the pyrite is processed with acid, alkali and deionized water, wherein the acid is selected from sulfuric acid, hydrochloric acid, phosphoric acid and acetic acid, and the alkali is selected from sodium hydroxide, potassium hydroxide and ammonia water.

12. The method of claim 8, further comprising the steps of:
e) drying the positive electrode plate;
f) winding the negative electrode and separator under a relative humidity lower than 1%; and
g) loading materials into a casing and sealing up the casing.
